# FASCICULE DE BREVET EUROPEEN

(11) **EP 2 277 031 B1**
(45) Date de publication et mention de la délivrance du brevet: **17.04.2019**
(21) Numéro de dépôt: 09745731.1
(22) Date de dépôt: 12.05.2009
(51) Int. Cl.: G01N 21/71

(54) **TÊTE DE MESURE DE TYPE LIBS OPTIMISÉE POUR L'ANALYSE DE COMPOSÉS LIQUIDES ET/OU À HAUTE TEMPÉRATURE**
FÜR DIE ANALYSE VON FLÜSSIGKEITSVERBINDUNGEN UND/ODER VERBINDUNGEN MIT HOHER TEMPERATUR OPTIMIERTER LIBS-MESSKOPF
LIBS MEASUREMENT HEAD OPTIMIZED FOR THE ANALYSIS OF LIQUID COMPOUNDS AND/OR COMPOUNDS AT HIGH TEMPERATURES

(30) Priorité: 14.05.2008 BE 200800271
(43) Date de publication de la demande: 26.01.2011
(73) Titulaire: Centre De Recherches Metallurgiques ASBL - Centrum Voor Research In De Metallurgie vzw, 1000 Bruxelles (BE)
(72) Inventeur: MONFORT, Guy, B-4420 Montegnee (BE)
(74) Mandataire: Lerho, Marc J. A.
(86) Numéro de dépôt international: PCT/EP2009/055708
(87) Numéro de publication internationale: WO 2009/138399

(56) Documents cités:
- EP-A- 0 274 403
- EP-A- 1 482 302
- DE-A1- 4 341 462
- DE-A1- 10 251 077
- JP-A- 57 119 241
- US-A- 6 109 783
- US-B1- 6 788 407
- RAI AWADHESH K ET AL: "High temperature fiber optic laser-induced breakdown spectroscopy sensor for analysis of molten alloy constituents" REVIEW OF SCIENTIFIC INSTRUMENTS, AIP, MELVILLE, NY, US, vol. 73, no. 10, 1 octobre 2002 (2002-10-01), pages 3589-3599, XP012039425 ISSN: 0034-6748
- NOLL R ET AL: "SCHNELLE MULTIELEMENT-ANALYSE IN DER STAHLSCHMELZE MIT LASERINDUZIERTER EMISSIONSSPEKTROMETRIE" STAHL UND EISEN, VERLAG STAHLEISEN, DUSSELDORF, DE, vol. 117, no. 1, 21 janvier 1997 (1997-01-21), pages 57-62, XP000641605 ISSN: 0340-4803
- Glenn N. Merberg ET AL: "Optical and mechanical properties of single-crystal sapphire optical fibers", Applied Optics, vol. 32, no. 18, 20 June 1993 (1993-06-20) , page 3201, XP055145978, ISSN: 0003-6935, DOI: 10.1364/AO.32.003201

## Description

### Objet de l'invention

La présente invention se rapporte à une tête de mesure LIBS optimisée pour l'analyse de composés liquides et/ou à haute température.

### Arrière-plan technologique et état de la technique

Dans l'industrie métallurgique ou verrière, notamment, l'analyse chimique de bains liquides est nécessaire pour diverses raisons.

La principale est d'en déterminer la composition afin d'assurer une qualité et des propriétés spécifiques au produit final. C'est le cas pour l'aluminium, les aciers inoxydables, le verre, etc. C'est aussi le cas pour des composés qui doivent servir de revêtement sur un substrat donné pour en améliorer les propriétés, comme par exemple les bains de zinc et ses composés pour la galvanisation ou d'aluminium pour les tôles aluminiées.

Une autre raison est de pouvoir déduire de cette analyse les dérives du procédé de fabrication et agir sur celui-ci pour en garantir la bonne marche et un fonctionnement stable. C'est le cas notamment au haut-fourneau, où la mesure de la teneur en silicium dans la fonte permet d'avoir une idée de la température du creuset et de son évolution. En agissant suffisamment rapidement sur les conditions opératoires, on peut éviter des dérives très difficiles à compenser vu les temps de réaction assez longs d'un tel outil de fabrication.

A l'heure actuelle, la façon de procéder pour effectuer ces analyses consiste le plus souvent à prélever manuellement, à l'aide d'un récipient adapté, un échantillon du bain liquide. Celui-ci est refroidi puis envoyé dans un laboratoire d'analyse où les mesures sont généralement faites à l'aide d'un spectromètre ou d'un appareil de fluorescence à rayons X. Cette méthode demande la présence d'un opérateur près du bain liquide à haute température, ce qui présente des risques non négligeables. De plus elle est discontinue et le nombre d'échantillons prélevés est limité pour une question de coût. Enfin, les temps de transfert et de préparation des échantillons font que les résultats ne sont pas obtenus instantanément. Ceci peut donc avoir des conséquences négatives, surtout lorsque les mesures sont effectuées dans un but de régulation du procédé.

Plus récemment, des tentatives de mesures par la méthode spectroscopique LIBS (*Laser-Induced Breakdown Spectroscopy*) se sont développées. Cette méthode utilise un laser pulsé (impulsions de 10 ns typiquement) de forte énergie (typiquement 100 à 1000 mJ) dont le faisceau est focalisé dans la cible constituée par le produit liquide où il génère localement un plasma dont la lumière émise est analysée par un spectromètre (spectroscopie d'émission atomique). On peut ainsi déterminer la concentration d'une série d'éléments grâce à l'intensité émise à des longueurs d'onde spécifiques.

Cette méthode a été appliquée avec succès au stade industriel pour la caractérisation de bains de verre. Dans ce cas, le système LIBS est placé à distance suffisante pour éviter les effets de la chaleur et la lumière est captée à l'aide d'un télescope. Pour des bains de métaux liquides, cette procédure est difficilement applicable car la présence d'oxydes ou d'impuretés à la surface altère la mesure.

Des systèmes ont alors été développés dans lesquels l'extrémité d'un tube est plongé sous la surface du liquide (voir par exemple JP-A-60 042644, M. SABSABI et al., *Determination of aluminium and iron content in molten zinc using laser-induced breakdown spectroscopy,* 3rd International Conference LIBS_2004, Sep. 28-Oct. 1, 2004, Torremolinos, Spain). Le faisceau laser et la lumière du plasma passent dans ce tube. Divers procédés assurent que l'endroit où se forme le plasma reste à un niveau constant pour garantir une focalisation optimale du laser. De tels systèmes ont été appliqués industriellement pour le zinc et l'aluminium.

Pour des métaux à plus haut point de fusion, ces dispositifs ne sont généralement pas applicables car le rayonnement auquel sont soumis le laser et le spectromètre est trop intense pour assurer un fonctionnement fiable.

Une solution retenue est de déporter les éléments sensibles loin du liquide et de transférer le faisceau laser jusqu'au bain. Des tests sur des fours pilotes ont bien été effectués mais, sauf cas particulier, ils ne sont pas applicables en pratique industrielle car ils utilisent un transport de faisceau à miroirs dont le règlage est très délicat, surtout s'il doit se faire sur plusieurs mètres afin de mettre à l'abri les éléments sensibles (Ramaseder N., Gruber J., Heitz J., Baeuerle D., Meyer W., Hochoertler J.: "Le suivi en continu de la composition chimique du métal à l'intérieur des réacteurs métallurgiques avec VAI-CON® Chem", Revue de Métallurgie, 2002, Vol. 99 n°6, pp.509-516).

Le faisceau laser peut également être transporté via une fibre optique. Ainsi, Awadhesh K. Rai et al.,"High temperature fiber optic laser-induced breakdown spectroscopy sensor for analysis of molten alloy constituents", Rev. Sci. Instrum., 2002, Vol.73 N°10, pp. 3589-3599, décrivent une installation munie d'une tête de mesure de type LIBS où le faisceau laser est transporté à proximité d'un bain d'aluminium fondu (point de fusion : 660°C) via une fibre optique en silice d'une longueur de 6 mètres. Le rayonnement laser issu de la fibre est ensuite collimaté et focalisé dans le bain d'aluminium. Les lentilles de collimation et de focalisation sont supportées par un support en acier inox qui les protège du bain en fusion, le support en inox pouvant travailler à des températures de l'ordre de 800°C.

Le dispositif décrit a pour désavantage de ne pas permettre l'analyse de matériaux à très haut point de fusion tels que l'acier (T° de fusion de 1560°); de même l'utilisation de fibres en silice ne permet pas de travailler avec des densités d'énergie très élevées. La densité d'énergie maximale tolérée serait dans ce cas de 2,5J/cm² (20mJ pour un diamètre de fibre de 1mm).

### Buts de l'invention

La présente invention vise à fournir une solution qui permette de s'affranchir des inconvénients de l'état de la technique.

En particulier, l'invention a pour but de fournir une tête de mesure de type LIBS particulièrement adaptée pour l'analyse de bains portés à très haute température.

L'invention a encore pour but de fournir une tête de mesure LIBS déportée pour éviter les rayonnements desdits bains, n'utilisant pas des systèmes complexes de transfert de faisceau laser à miroirs.

L'invention a également pour but de fournir une installation permettant le transfert d'une grande densité d'énergie laser.

### Principaux éléments caractéristiques de l'invention

La présente invention se rapporte à une installation pour l'analyse chimique d'un bain porté à haute température munie d'une tête d'analyse par spectroscopie laser-plasma de type LIBS, pour *Laser-Induced Breakdown Spectroscopy,* comprenant un laser pulsé de grande énergie, de préférence supérieure à 100 mJ, apte à émettre à distance un faisceau de lumière focalisé dans une région du bain de composition chimique à déterminer, pour créer un plasma localement et comprenant un spectromètre pour l'analyse spectrale de la lumière émise par ledit plasma, ladite installation comportant des moyens pour déporter et protéger du rayonnement émis par le bain tant le laser que le spectromètre de la tête LIBS, caractérisée en ce que le laser est déporté latéralement grâce à un tube le prolongeant et terminé par une lentille focalisatrice du faisceau laser, et grâce à une première fibre optique en saphir et de diamètre inférieur à 500 microns dont une première extrémité se trouve au niveau de la lentille focalisatrice et une seconde extrémité se trouve au foyer d'un premier miroir parabolique apte à collimater le faisceau laser et à renvoyer le faisceau collimaté sur une lentille plan-convexe elle-même apte à focaliser le faisceau laser à la surface du bain, ladite lentille plan-convexe ayant une distance focale telle que le faisceau soit focalisé à la surface du bain, lorsque celui-ci est distant d'environ 1 mètre, ladite installation comportant en outre, dans l'axe du bain, un second miroir sphérique ou parabolique de grand diamètre et revêtu d'un revêtement optique réfléchissant dans un intervalle de longueur d'onde adéquat pour la mesure spectrométrique associée au système LIBS, ledit second miroir sphérique ou parabolique collectant la lumière émise par ledit plasma et la renvoyant sur un troisième miroir, de préférence plan, qui lui-même la focalise sur la première extrémité d'une seconde fibre optique, dont la seconde extrémité est connectée au spectromètre, ladite seconde fibre optique étant maintenue dans un tube qui passe à travers le centre du second miroir sphérique ou parabolique et l'installation comportant des moyens pour déplacer ledit tube longitudinalement.

Des modes d'exécution préférés de l'invention reprennent en outre en combinaison une ou plusieurs des caractéristiques ci-après :
- la première fibre optique est capable de transmettre une densité d'énergie d'au moins 50 J/cm² et de préférence d'au moins 200 J/cm² ;
- la longueur de la première fibre optique est comprise entre 1 et 2 mètres ;
- ledit intervalle de longueur d'onde se situe dans le domaine ultraviolet ;
- ladite seconde fibre optique est en silice fondue et traitée pour l'ultraviolet ;
- ladite installation comporte des moyens pour réguler le déplacement du tube en fonction de la lumière pénétrant effectivement dans la seconde fibre ;
- ladite installation comporte une cellule photosensible entourant ou se trouvant à proximité de la seconde fibre pour évaluer la quantité de lumière ne pénétrant pas dans la fibre ;
- la tête d'analyse est placée à l'extrémité d'un tube plongeant dans le bain et parcouru par un flux de gaz inerte ;
- ladite installation comporte en outre des moyens de refroidissement, de préférence par eau ;
- elle comporte des moyens pour refroidir le premier miroir parabolique et la lentille plan-convexe ;
- elle comporte en outre un filtre en verre placé en avant de l'installation, ledit filtre étant transparent au rayonnement ultraviolet et opaque vis-à-vis du rayonnement infrarouge.

### Brève description des figures

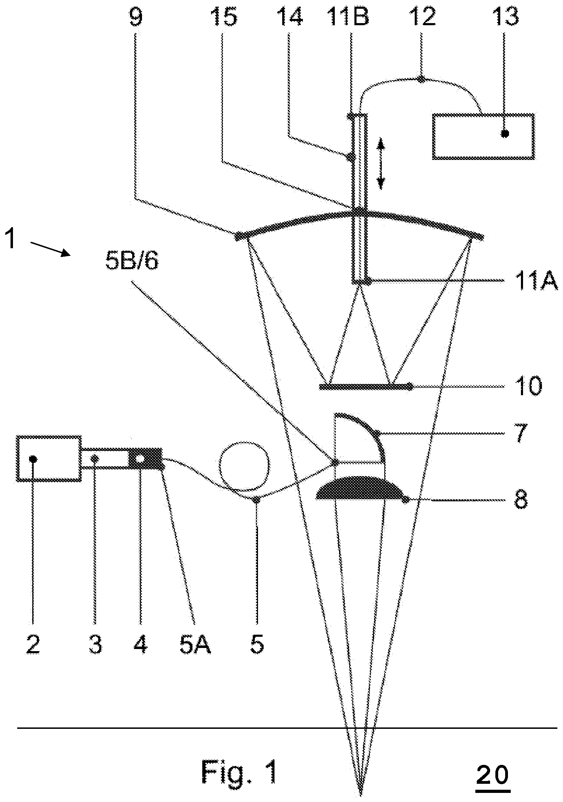

La figure 1 représente un schéma du dispositif selon une forme d'exécution préférée proposée selon la présente invention.

### Description d'une forme d'exécution préférée de l'invention

Le dispositif 1 proposé selon l'invention repose sur plusieurs éléments dont la combinaison permet d'obtenir une analyse chimique suffisamment sensible des éléments composant un bain liquide à haute température. Ces éléments, dont l'utilisation est connue de l'homme de l'art, sont agencés de manière originale afin de permettre la mesure dans les conditions précitées.

Un laser pulsé 2 de grande énergie (>100 mJ, de préférence >200 mJ) est couplé, à l'aide d'un tube 3 de longueur suffisante pour l'éloigner de manière sûre du bain liquide, à une lentille 4 qui focalise le faisceau sur une première extrémité 5A d'une fibre optique en saphir 5 d'un diamètre inférieur à 500 µm. Ce type de fibre est indispensable pour transférer une telle puissance (la densité d'énergie pouvant aller jusqu'à 1200 J/cm²), sans exiger de réglage précis tout en permettant une focalisation ultérieure à grande distance focale sur un diamètre suffisamment faible que pour créer un plasma. Les fibres en saphir ont comme propriété d'absorber de l'ordre de 20% du rayonnement laser par mètre. L'utilisation d'un tube 3 permet de placer le laser 2 à distance tout en limitant la longueur de la fibre (par exemple à environ deux mètres) et par là-même le rayonnement absorbé.

L'autre extrémité 5B de la fibre optique est placée au foyer 6 d'un miroir parabolique hors axe 7. Le faisceau ainsi collimaté est ensuite focalisé à l'aide d'une lentille plan-convexe 8 à une distance d'environ 1 mètre de la surface du bain 20. Ce dispositif permet de maintenir l'optique à une distance suffisante pour la protéger des projections de liquide, de la poussière et de la fumée. A l'arrière du miroir parabolique 7 et dans le même axe, on place un autre miroir parabolique 9 de grand diamètre et revêtu d'un revêtement optique réfléchissant la gamme de longueurs d'onde souhaitée pour la mesure spectrométrique, généralement dans le domaine UV. Ce miroir collecte la lumière générée par le plasma et la renvoie sur un miroir plan 10 qui focalise la lumière sur l'extrémité 11A d'une fibre optique 12 en silice fondue traitée pour l'UV et connectée à son extrémité 11B à un spectromètre 13. Cette fibre 12 est maintenue dans un tube 14 qui passe à travers le centre 15 du grand miroir 9 et actionné par un système qui permet de le déplacer longitudinalement.

Grâce à l'utilisation d'un laser puissant et d'une distance focale de l'ordre de 1 mètre, il est possible d'obtenir un plasma suffisant pour des variations de hauteur du liquide de +/- 50 mm. Dans la configuration particulière présentée sur la figure 1, la focalisation de la lumière dans la fibre de verre 12 est optimisée par déplacement de celle-ci sur une distance de +/- 5 mm. Le déplacement est régulé en fonction de la lumière pénétrant effectivement dans la fibre 12. Celle-ci peut être évaluée par une mesure de l'intensité de l'ordre zéro du spectromètre ou par mesure de la lumière qui ne pénètre pas dans la fibre à l'aide d'une cellule photosensible entourant celle-ci par exemple (non représenté).

Avantageusement, l'ensemble constituant la tête de mesure 1 est placé à l'extrémité d'un tube qui plonge dans le bain liquide et qui est parcouru par un flux de gaz inerte qui empêche les remontées de fumées et de poussières (non représenté). L'ensemble constituant la tête de mesure 1 est de préférence refroidi par un moyen adéquat pour en maintenir la température à un niveau raisonnable. Idéalement, ce refroidissement se fera par eau et/ou par la pose d'un filtre du rayonnement infrarouge placé à l'avant du tube.

### Avantages de la méthode

Le dispositif proposé permet de s'affranchir de variations de niveau du liquide à mesurer. La grande distance de focalisation permet aussi de protéger les optiques tandis que la grande puissance du laser, couplée à l'utilisation d'une fibre saphir de petit diamètre assure une focalisation efficace tout en permettant le maintien à distance des organes sensibles (laser, spectromètre,...). L'utilisation de fibres optiques permet une utilisation industrielle qui évite les règlages trop précis exigés par les transports de lumière à miroirs.

L'ensemble fibre saphir de petit diamètre, miroir parabolique et lentille de focalisation choisis pour permettre une focalisation efficace à une distance d'environ 1 mètre constitue une combinaison originale qui n'a pas encore été appliquée pour des mesures LIBS.

## Revendications

1. Installation pour l'analyse chimique d'un bain (20) porté à haute température munie d'une tête d'analyse par spectroscopie laser-plasma de type LIBS, pour *Laser-Induced Breakdown Spectroscopy* (1), comprenant un laser pulsé de grande énergie (2), de préférence supérieure à 100 mJ, apte à émettre à distance un faisceau de lumière focalisé dans une région du bain (20) de composition chimique à déterminer, pour créer un plasma localement et comprenant un spectromètre (13) pour l'analyse spectrale de la lumière émise par ledit plasma, ladite installation comportant des moyens pour déporter et protéger du rayonnement émis par le bain (20) tant le laser (2) que le spectromètre (13) de la tête LIBS, **caractérisée en ce que** le laser (2) est déporté latéralement grâce à un tube (3) le prolongeant et terminé par une lentille focalisatrice du faisceau laser (4), et grâce à une première fibre optique (5) en saphir et de diamètre inférieur à 500 microns, ladite première fibre optique comportant une première extrémité (5A) se trouvant au niveau de la lentille focalisatrice (4) et une seconde extrémité (5B) se trouvant au foyer (6) d'un premier miroir parabolique (7) apte à collimater le faisceau laser et à renvoyer le faisceau collimaté sur une lentille plan-convexe (8) elle-même apte à focaliser le faisceau laser à la surface du bain (20), ladite lentille plan-convexe (8) ayant une distance focale telle que le faisceau soit focalisé à la surface du bain, lorsque celui-ci est distant d'environ 1 mètre, ladite installation comportant en outre, dans l'axe du bain, un second miroir sphérique ou parabolique (9) de grand diamètre et revêtu d'un revêtement optique réfléchissant dans un intervalle de longueur d'onde adéquat pour la mesure spectrométrique associée au système LIBS, ledit second miroir sphérique ou parabolique (9) collectant la lumière émise par ledit plasma et la renvoyant sur un troisième miroir (10), de préférence plan, qui lui-même la focalise sur la première extrémité (11A) d'une seconde fibre optique (12), dont la seconde extrémité (11B) est connectée au spectromètre (13), ladite seconde fibre optique (12) étant maintenue dans un tube (14) qui passe à travers le centre du second miroir sphérique ou parabolique (9) et l'installation comportant des moyens pour déplacer ledit tube (14) longitudinalement.

2. Installation selon la revendication 1, **caractérisé en ce que** la première fibre optique (5) est capable de transmettre une densité d'énergie d'au moins 50 J/cm² et de préférence d'au moins 200 J/cm².

3. Installation selon la revendication 1, **caractérisé en ce que** la longueur de la première fibre optique (5) est comprise entre 1 et 2 mètres.

4. Installation selon la revendication 1, **caractérisée en ce que** ledit intervalle de longueur d'onde se situe dans le domaine ultraviolet.

5. Installation selon la revendication 1, **caractérisée en ce que** ladite seconde fibre optique (12) est en silice fondue et traitée pour l'ultraviolet.

6. Installation selon la revendication 1, **caractérisée en ce qu'**elle comporte des moyens pour réguler le déplacement du tube en fonction de la lumière pénétrant effectivement dans la seconde fibre (12).

7. Installation selon la revendication 6, **caractérisée en ce qu'**elle comporte une cellule photosensible entourant ou se trouvant à proximité de la seconde fibre (12) pour évaluer la quantité de lumière ne pénétrant pas dans la fibre (12).

8. Installation selon la revendication 1, **caractérisée en ce que** la tête d'analyse (1) est placée à l'extrémité d'un tube plongeant dans le bain (20) et parcouru par un flux de gaz inerte.

9. Installation selon la revendication 1, **caractérisée en ce qu'**elle comporte en outre des moyens de refroidissement, de préférence par eau.

10. Installation selon la revendication 9, **caractérisée en ce qu'**elle comporte des moyens pour refroidir le premier miroir parabolique (7) et la lentille plan-convexe (8) .

11. Installation selon la revendication 9 ou 10, **caractérisée en ce qu'**elle comporte en outre un filtre en verre placé en avant de l'installation, ledit filtre étant transparent au rayonnement ultraviolet et opaque vis-à-vis du rayonnement infrarouge.

## Patentansprüche

1. Anlage zur chemischen Analyse eines Bads (20), das auf eine hohe Temperatur gebracht wurde, ausgestattet mit einem Kopf zur Analyse durch Laserplasmaspektroskopie vom Typ LIBS für eine *Laser-Induced Breakdown Spectroscopy* (1), umfassend einen gepulsten Laser mit hoher Energie (2), vorzugsweise von mehr als 100 mJ, der ausgelegt ist, um aus der Entfernung einen Lichtstrahl zu emittieren, der in eine Region des Bads (20) mit zu bestimmender chemischer Zusammensetzung fokussiert wird, um lokal ein Plasma zu erzeugen, und umfassend einen Spektrometer (13) zur spektralen Analyse des Lichts, das von dem Plasma emittiert wird, wobei die Anlage Mittel umfasst, um von der Strahlung, die vom Bad (20) emittiert wird, sowohl den Laser (2) als auch den Spektrometer (13) des LIBS-Kopfs abzudrängen und zu schützen, **dadurch gekennzeichnet, dass** der Laser (2) seitlich dank eines Rohrs (3) abgedrängt wird, das ihn verlängert, und abgeschlossen durch eine Fokussierlinse des Laserstrahls (4) und dank einer ersten optischen Faser (5) aus Saphir und mit einem Durchmesser von weniger als 500 Mikrometer, wobei die erste optische Faser ein erstes Ende (5A) umfasst, das sich auf der Ebene der Fokussierlinse (4) befindet, und ein zweites Ende (5B), das sich im Brennpunkt (6) eines ersten Parabolspiegels (7) befindet, der ausgelegt ist, um den Laserstrahl zu kollimieren und den kollimierten Laserstrahl auf eine plankonvexe Linse (8) zurückzuschicken, die selbst ausgelegt ist, um den Laserstrahl auf die Oberfläche des Bads (20) zu fokussieren, wobei die plankonvexe Linse (8) eine derartige Brennweite aufweist, dass der Strahl auf die Oberfläche des Bads fokussiert wird, wenn dieses ungefähr 1 m entfernt ist, wobei die Anlage außerdem, in der Achse des Bads, einen zweiten sphärischen oder Parabolspiegel (9) mit großem Durchmesser und beschichtet mit einer optischen Beschichtung, die mit einem angemessenen Wellenlängenintervall reflektiert, zur spektrometrischen Messung, die mit dem LIBS-System assoziiert ist, umfasst, wobei der zweite sphärische oder Parabolspiegel (9) das Licht sammelt, das von dem Plasma emittiert wird, und es auf einen dritten, vorzugsweise ebenen Spiegel (10) zurückschickt, der es seinerseits auf das erste Ende (11A) einer zweiten optischen Faser (12) fokussiert, deren zweites Ende (11B) mit dem Spektrometer (13) verbunden ist, wobei die zweite optische Faser (12) in einem Rohr (14) gehalten wird, das durch das Zentrum des zweiten sphärischen oder Parabolspiegels (9) verläuft, und wobei die Anlage Mittel umfasst, um das Rohr (14) in der Längsrichtung zu verschieben.

2. Anlage nach Anspruch 1, **dadurch gekennzeichnet, dass** die erste optische Faser (5) dazu in der Lage ist, eine Energiedichte von mindestens 50 J/cm² und vorzugsweise von mindestens 200 J/cm² zu übertragen.

3. Anlage nach Anspruch 1, **dadurch gekennzeichnet, dass** die Länge der ersten optischen Faser (5) im Bereich zwischen 1 und 2 Meter liegt.

4. Anlage nach Anspruch 1, **dadurch gekennzeichnet, dass** das Wellenlängenintervall im Ultraviolettbereich angeordnet ist.

5. Anlage nach Anspruch 1, **dadurch gekennzeichnet, dass** die zweite optische Faser (12) aus Quarzglas und für Ultraviolett behandelt ist.

6. Anlage nach Anspruch 1, **dadurch gekennzeichnet, dass** sie Mittel umfasst, um die Verschiebung des Rohrs in Abhängigkeit vom Licht zu regulieren, das effektiv in die zweite Faser (12) eindringt.

7. Anlage nach Anspruch 6, **dadurch gekennzeichnet, dass** sie eine lichtempfindliche Zelle umfasst, die die zweite Faser (12) umgibt oder sich in deren Nähe befindet, um die Menge des Lichts zu bewerten, das nicht in die Faser (12) eindringt.

8. Anlage nach Anspruch 1, **dadurch gekennzeichnet, dass** der Analysekopf (1) am Ende eines Rohrs platziert ist, das in das Bad (20) eingetaucht und von einem inerten Gasfluss durchströmt ist.

9. Anlage nach Anspruch 1, **dadurch gekennzeichnet, dass** sie außerdem Mittel zur Abkühlung, vorzugsweise durch Wasser, umfasst.

10. Anlage nach Anspruch 9, **dadurch gekennzeichnet, dass** sie Mittel zum Abkühlen des ersten Parabolspiegels (7) und der plankonvexen Linse umfasst.

11. Anlage nach Anspruch 9 oder 10, **dadurch gekennzeichnet, dass** sie außerdem einen Glasfilter umfasst, der vor der Anlage platziert ist, wobei der Filter transparent für die ultraviolette Strahlung und undurchlässig gegenüber der Infrarotstrahlung ist.

## Claims

1. Installation for the chemical analysis of a high-temperature bath (20) equipped with a laser-plasma spectroscopy analysis head of the LIBS (Laser Induced Breakdown Spectroscopy) type (1), comprising a pulsed high-energy laser (2), preferably greater than 100 mJ, which is able to remotely emit a focused light beam in a region of the bath (20) with the chemical composition to be determined, in order to locally create a plasma, and comprising a spectrometer (13) for the spectral analysis of the light emitted by said plasma, said installation comprising means for shifting and protecting from the radiation emitted by the bath (20) the laser (2) as well as the spectrometer (13) of the LIBS head, **characterized in that** the laser (2) is laterally shifted by means of a tube (3) extending it and ending with a lens that focuses the laser beam (4), and, by means of a first optical fiber (5) of sapphire with a diameter less than 500 µm, said first optical fiber comprising a first end (5A) located at the level of the focusing lens (4) and a second end (5B) located at the focal point (6) of a first parabolic mirror (7) that is capable of collimating the laser beam and of returning the collimated beam to a plano-convex lens (8) that is itself capable of focusing the laser beam onto the surface of the bath (20), said plano-convex lens (8) having a focal length such that the beam is focused on the surface of the bath, when it is at a distance of about 1 meter, said installation further comprising in the axis of the bath a second spherical or parabolic mirror (9) of large diameter and coated with a reflective optical coating in a suitable wavelength range for the spectrometric measurement associated with the LIBS system, said second spherical or parabolic mirror (9) collecting the light emitted by said plasma and returning it to a third mirror (10), preferably plane, which itself focuses it on the first end (11A) of a second optical fiber (12), whose second end (11B) is connected to the spectrometer (13), said second optical fiber (12) being held in a tube (14) that passes through the center of the second spherical or parabolic mirror (9) and the installation comprising means for longitudinally moving the tube (14).

2. Installation according to Claim 1, **characterized in that** the first optical fiber (5) is capable of transmitting an energy density of at least 50 J/cm² and preferably at least 200 J/cm².

3. Installation according to Claim 1, **characterized in that** the length of the first optical fiber (5) is between 1 and 2 meters.

4. Installation according to Claim 1, **characterized in that** said wavelength range is in the ultraviolet range.

5. Installation according to Claim 1, **characterized in that** said second optical fiber (12) is fused silica and treated for the ultraviolet.

6. Installation according to Claim 1, **characterized in that** it comprises means for regulating the shifting of the tube as a function of the light actually penetrating into the second fiber (12).

7. Installation according to Claim 6, **characterized in that** it comprises a photosensitive cell surrounding, or in the vicinity of, the second fiber (12) to evaluate the amount of light not penetrating into the fiber (12).

8. Installation according to Claim 1, **characterized in that** the analysis head (1) is placed at the end of a tube immersed in the bath (20) and traversed by a stream of inert gas.

9. Installation according to Claim 1, **characterized in that** it further comprises cooling means, preferably with water.

10. Installation according to Claim 9, **characterized in that** it comprises means for cooling the first parabolic mirror (7) and the plano-convex lens (8).

11. Installation according to Claim 9 or 10, **characterized in that** it further comprises a glass filter placed in front of the installation, said filter being transparent to ultraviolet radiation and opaque to infrared radiation.
